# EUROPÄISCHE PATENTSCHRIFT

(11) **EP 2 164 625 B1**
(45) Veröffentlichungstag und Bekanntmachung des Hinweises auf die Patenterteilung: **17.08.2011**
(21) Anmeldenummer: 08756845.7
(22) Anmeldetag: 27.06.2008
(51) Int. Cl.: B01J 19/22, B29C 39/16, C08F 2/02

(54) **VORRICHTUNG ZUM KONTINUIERLICHEN POLYMERISIEREN**
APPARATUS FOR CONTINUOUS POLYMERIZATION
DISPOSITIF DE POLYMÉRISATION EN CONTINU

(30) Priorität: 27.06.2007 AT 9972007
(43) Veröffentlichungstag der Anmeldung: 24.03.2010
(73) Patentinhaber: Berndorf Band GmbH, 2560 Berndorf (AT)
(72) Erfinder: MORGENBESSER, Karl, A-2870 Aspang (AT)
(74) Vertreter: Itze, Peter
(86) Internationale Anmeldenummer: PCT/AT2008/000236
(87) Internationale Veröffentlichungsnummer: WO 2009/000007

(56) Entgegenhaltungen:
- WO-A-98/23426
- GB-A- 2 010 736
- US-A- 3 376 371
- US-A- 3 904 336
- US-A- 5 372 493

## Beschreibung

Die Erfindung bezieht sich auf eine Vorrichtung zum kontinuierlichen Polymerisieren einer fließfähigen Masse zwischen zwei an ihren zueinander weisenden glatten Flächen von endlosen Stahlbändern.

Aus der US 3 376 371 A wird eine Doppelbandanlage zur kontinuierlichen Polymerisation zu Platten bekannt, wobei der Einlaufbereich entweder eine natürliche Biegung aufweist oder geradlinig ist, welcher sodann in einen geradlinigen Bereich übergeht. Das obere und das untere Band sollen in etwa parallel verlaufen und einen Winkel zwischen 0,5° und 5° einnehmen, und zwar je nach Viskosität der Mischung. Die Breite der Bänder beträgt ca. 1,5 m. Da die Viskosität der Mischung in der Regel, je länger die Polymerplatten gegossen werden, zunimmt, müsste nach diesen Angaben der Neigungswinkel während des Gießvorganges entsprechend der Änderung der Viskosität der Mischung geändert werden. Es wird während der Polymerisation zwischen einer Polymerisationszone, in welcher mit heißer Luft oder Heißwasser erhitzt wird, und eine Nachpolymerisation, in welcher mit Heizluft erhitzt wird, unterschieden.

In der US 5 372 493 A wird eine Vorrichtung zum Polymerisieren mit einer Beheizung für einen Behälter für Ausgangssubstanz beschrieben.

Aus der US 4046850 A wird eine weitere Vorrichtung zum kontinuierlichen Polymerisieren in einer Doppelbandanlage bekannt, wobei die oberen und unteren Bänder in Form einer natürlichen Biegung vorliegen. An diesem Bereich schließt ein im Wesentlichen horizontaler Bereich an, bevor die Bänder in die Zone der Nachpolymerisation eintreten. Über die Neigung des Einlaufbereiches mit dem natürlichen Verlauf der Bänder, der durch den oberen und unteren Punkt der Bänder sowie dem herrschenden Druck bestimmt wird, ist keine Aussage getroffen. Die Breite des Bandes liegt ca. bei 1,60 m. Es liegen zwei endlose Bänder vor, wobei das untere Band sowohl beim Eintritt als auch beim Austritt sich über das obere Band erstreckt und ein Eintrittsspalt und ein Austrittsbereich gebildet wird. Der Eintrittsbereich ist gerade verlaufend ausgebildet und kann horizontal oder geneigt zur Horizontalen ausgebildet sein. Auch besteht die Möglichkeit, denselben in Form einer natürlichen Biegung verlaufen zu lassen. Entlang der Bewegungsrichtung wird der Spalt zwischen dem unteren und oberen Band entsprechend der Schrumpfung der polymerisierenden Mischung verkleinert. Im Anschluss des Eintrittsbereiches sind die beiden Bänder zweimal in unterschiedliche Richtung gebogen, und zwar sinuskurvenförmig verlaufend. Die Dicke der zu gewinnenden Platte wird durch den Abstand der Bänder zueinander eingestellt. Der Austrittsbereich der Platte aus den Bändern kann gerade, insbesondere horizontal, ausgebildet sein, wobei der Abstand der beiden Bänder zueinander größer ist als die Dicke des erzeugten Produktes. Der Einlaufbereich ist zu 6° 31' zur Horizontalen geneigt. Das Band ist, wie bereits ausgeführt, danach zweifach gekrümmt ausgebildet.

In einem Vergleichsbeispiel weist der gerade ausgebildete Einlaufbereich einen Winkel von 13° 14' zur Horizontalen auf. An diesem schließt ein kreisförmig gekrümmter Bereich an. Nachteilig bei dieser Ausbildung ist jedoch, dass nach dem Einlaufbereich die teilweise polymerisierte Masse seitlich von den beiden Bändern austritt.

In einem weiteren Vergleichsbeispiel weist der Einlaufbereich eine Neigung von 6° 31' auf. Der anschließende Bereich ist gerade ausgebildet. Das Produkt weist eine Dicke zwischen 2,5 mm und 3,54 mm auf. Diese Unregelmäßigkeiten in der Dicke werden darauf zurückgeführt, dass die Bänder während der Polymerisation nicht gekrümmt, sondern über den gesamten Bereich gerade ausgebildet sind.

Die Aufgaben der vorliegenden Erfindung bestehen darin, eine Vorrichtung zu schaffen, die erlaubt, einen genauen Abstand zwischen dem unteren und oberen Stahlband einzustellen und eine optisch leere Platte mit einheitlicher Dichte zu ermöglichen. Weiters soll, um dieses Ziel zu erreichen, eine möglichst gleichmäßige Verteilung der zu polymerisierenden Masse in der Verteilerzone bzw. vor der Verteilerzone über eine große Breite verwirklicht sein. Weiters sollen die Stahlbänder eine möglichst gleiche, insbesondere dieselbe, Geschwindigkeit aufweisen.

Die vorliegende Erfindung geht von einem Stand der Technik aus, wie er in der US 4 046 850 A beschrieben ist.

Die erfindungsgemäße Vorrichtung zum kontinuierlichen Polymerisieren einer fließfähigen Masse zu Platten zwischen zwei an ihren zueinander weisenden glatten Flächen von bewegbaren endlosen Stahlbändern, insbesondere Edelstahlbändern, welche die Masse formen, wobei zwischen den Stahlbändern, die normal zur Bewegungsrichtung horizontal ausgerichtet sind, die an Rollen führbar und an Umlenkrollen umlenkbar sind, ein verjüngender Spalt gebildet ist, welcher lateral beidseits mit einem unteren und oberen Stahlband kooperierende bewegte Begrenzer für den Spalt in einem Querverteilungs- und Polymerisationsbereich aufweisen, und das untere Stahlband entgegengesetzt der Bewegungsrichtung der Stahlbänder gesehen, über das obere Stahlband hinausragt, wobei ein offener Aufgabebereich für die fließfähige Masse mit einem in Bewegungsrichtung gesehen anschließenden Teilspalt mit dem Querverteilungsbereich für die fließfähige Masse gebildet ist, und mehrere Bereiche zur Temperierung der beiden Stahlbänder auf unterschiedliche Temperaturen in Bewegungsrichtung der Stahlbänder vorgesehen sind, und der Abstand zwischen den Stahlbändern einstellbar ist, besteht im Wesentlichen darin, dass die fließfähige Masse über nur ein Rohr, einen Schlauch od. dgl. verbunden mit einem Vorratsbehälter, der vorzugsweise eine thermische Isolierung aufweist, auf den Aufgabereich direkt einbringbar ist, und das untere gerade vertikal festgestellte Stahlband im Querverteilungsbereich, dem Teilspalt in Bewegungsrichtung gesehen mit der Horizontalen einen Winkel von 6° bis 15°, insbesondere 8° bis 12°, einschließt, und das obere Stahlband im Polymerisationsbereich über Federmittel gegen die fließfähige Masse haltbar ist, durch welche das untere Band gegen die mit diesem kooperierenden Rollen haltbar ist, und nach diesem das untere Stahlband in Bewegungsrichtung gesehen die Form einer Krümmung aufweist und nach diesem anschließend ein gerader Bereich vorgesehen ist.

Dadurch, dass das untere Band vor dem Einlauf in den zwischen dem oberen und unteren Band gebildeten Teilspalt beginnt, kann eine Verteilung der zu polymerisierenden Massen bereits vor dem Teilspalt ohne Behinderung der Querströmungen erreicht werden.

Durch die bewegten Begrenzer des Spaltes wird der Spalt mit Teilspalt lateral an beiden Seiten abgeschlossen, wobei durch die Bewegung der Begrenzer, beispielsweise endlose Bänder, eine Reibung zwischen den Begrenzern und dem vorerst hautförmigen polymerisierten Film nicht aufgebaut wird, so dass der Film nicht zerstört wird. Unter Platten, die mit der erfindungsgemäßen Vorrichtung erzeugt werden können, sind solche mit einer Dicke von ungefähr 1 mm bis ungefähr 30 mm zu verstehen.

Der Querverteilerbereich erstreckt sich vom Bereich, in welchem die zu polymerisierende Masse am unteren Band aufgebracht wird bis unterhalb des unteren Scheitels der Umlenkrolle des oberen Bandes.

Die Dicke der zu erzeugenden Platte wird durch den Abstand der beiden Bänder zueinander festgelegt.

Durch die mehreren Bereiche zur Temperierung der beiden Stahlbänder wird den unterschiedlichen Reaktionsbedingungen, wie Erhitzen, um eine beschleunigte Polymerisation zu erreichen und anschließend, wenn die exotherme Reaktion gestartet ist, so erfolgt anschließend ein Auspolymerisieren, wobei eine Temperierung der Bänder auf niedrigere Temperatur erfolgt.

Wird die fließfähige Masse über nur einen feststehenden Schlauch oder feststehendes Rohr gespeist von einem Vorratsbehälter, so ist sichergestellt, dass die einzubringende Masse eine einheitliche Viskosität aufweist und damit, da die Viskosität vom bereits vorvernetzten Zustand der Masse abhängig ist, kann ein einheitliches Polymerisieren erreicht werden, so dass keine unterschiedlichen Streifen in der Platte auftreten. Die thermische Isolierung des Vorratsbehälters gestattet eine besonders gleichmäßige Temperaturverteilung der Massen im Behälter, so dass der Vernetzungsgrad der Mischung im Behälter von der Mitte bis zum Wandbereich gleichmäßig sein kann.

Schließt das untere Band im Verteilungsbereich mit der Horizontalen einen Winkel von 8° bis 12° ein, so war es außerordentlich überraschend, dass die Verteilung der zu polymerisierenden Masse, bezogen quer auf die Banderstreckung, besonders gleichmäßig ist, und dass die Verweilzeit der zu polymerisierenden Masse vor dem Spalt besonders groß gehalten werden kann.

Dadurch, dass das untere Band zwei gerade Bereiche aufweist, die lediglich über einen gekrümmten Bereich ineinander übergeht, kann eine besonders hohe gleichmäßige Geschwindigkeit zwischen dem oberen und unteren Band eingehalten werden, da lediglich im Bereich der Krümmung unterschiedliche Geschwindigkeiten vorliegen, wodurch einerseits eine einheitliche Dicke gewährleistet ist und andrerseits, da keine Scherbeanspruchungen an dem polymerisierten Produkt auftreten bzw. nur in der Krümmung auftreten, wird die optische Leere der zu bildenden Platte besonders günstig ermöglicht.

Durch die federnde Halterung des oberen Bandes gegen die fließfähige Masse und damit gegen das untere Band, wird der Volumsänderung der zu polymerisierenden Masse zwischen dem unteren und oberen Stahlband besonders vorteilhaft Rechnung getragen, da einerseits nach dem Eintritt in den Spalt die Masse zuerst expandiert, das heißt, das obere Stahlband wölbt sich nach oben, wohingegen bei der Polymerisation in der Regel eine Volumskontraktion eintritt. Durch die federnde Halterung des oberen Stahlbandes kann ohne Nachstellbedarf der Volumsänderung besonders einfach Rechnung getragen werden.

Ist das untere Stahlband in vertikaler und horizontaler Richtung durch von unten angreifenden feststehenden drehbaren Rollen in seinem Verlauf festgelegt, so ist dasselbe in seiner Lage exakt definiert, wodurch lediglich das obere Stahlband in seinem Abstand zum unteren Stahlband variabel festgelegt werden kann, um Platten unterschiedlicher Dicke zu erhalten.

Sowohl das untere als auch das obere Band kann auch eine seitliche Führung, also quer zur Bewegungsrichtung der Bänder, aufweisen.

Ist das obere Stahlband durch druckbeaufschlagte von oben auf das obere Stahlband angreifende Rollen in seinem Verlauf festlegbar, so kann durch Änderung des Druckes der Änderung der Viskosität über die Zeit aufgrund zunehmendem Polymerisationsgrad der einzubringenden Masse einfach Rechnung getragen werden.

Ein besonders einfaches Einstellen der Dicke der zu fertigenden Platte wird dadurch erhalten, dass die Rollen, welche an dem oberen Stahlband angreifen, von oben nach unten und umgekehrt, in einer Mittellage des Verlaufes des oberen Bandes festgelegt sind.

Ist das obere Band, die Umlenkrollen und mit diesen zusammenwirkenden Rollen an einem gemeinsamen Gestell angeordnet, so kann ein besonders einfaches Einstellen der Dicke der zu fertigenden Platte erfolgen.

Sind die Rollen, welche am oberen Stahlband angreifen, mit unterschiedlichem Druck, insbesondere über Zylinder/Kolbenaggregate, beaufschlagbar, so kann der Druck auf das obere Stahlband besonders einfach reguliert werden.

Ist eine Mehrzahl von Rollen des oberen und/oder unteren Bandes zu einzelnen Gruppen zusammengefasst, so können durch diese einzelne Bereiche der Erhitzung bzw. Temperierung gebildet werden, und für das obere Band einzelne Druckbereiche geschaffen werden, die dem Polymerisationsgrad der Masse Rechnung tragen. Ist im Nachpolymerisationsbereich das untere Stahlband mit seinem geraden Bereich etwa horizontal, so ist jegliche weitere Krümmung des bereits polymerisierten Produktes vermieden, und es kann das Produkt dem Spalt etwa horizontal entnommen werden, wobei das Entnehmen des Produktes, wenn sich das untere Band im Auslauf über das obere Band erstreckt, sich besonders einfach gestalten kann.

Wird das untere Band im Bereich außerhalb des oberen Bandes gekühlt, so gestaltet sich die Entnahme der Platte besonders einfach.

Wird vor dem Bereich des Einlaufspaltes, insbesondere zwischen den beiden seitlichen Begrenzern Luft abgesaugt, so entsteht ein Unterdruck, wodurch ein Einmischen von Luft in die zu polymerisierende Masse verringert werden kann.

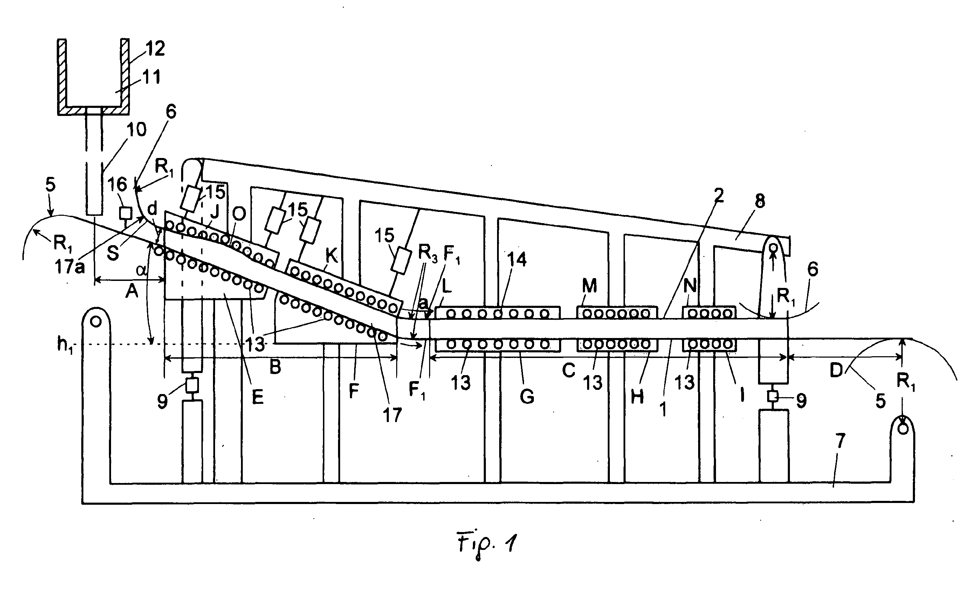

Im Folgenden wird die Erfindung anhand der Zeichnung und der Beispiele näher erläutert.

In der einzigen Figur ist eine erfindungsgemäße Vorrichtung zum Polymerisieren schematisch dargestellt.

Sowohl vom unteren Stahlband 1 als auch dem oberen Stahlband 2 ist lediglich der Vorlauf, nicht jedoch der Rücklauf, dargestellt. Die Umkehrrollen 5, 6, jeweils mit einem Radius R₁ von 900 mm, für das untere Stahlband und und das obere Stahlband 1, 2 sind im Gestell 7 für das untere Stahlband und im Gestell 8 für das obere Stahlband gelagert. Das Gestell 7 für das untere Stahlband ist fix angeordnet, wohingegen das Gestell 8 für das obere Stahlband am Gestell 7 für das untere Stahlband abstützt und über Spindeln 9 höhenverstellbar ist. Zwischen dem unteren Stahlband 1 und dem oberen Stahlband 2 ist ein Spalt 17 mit einem Normalabstand d, der von der Dicke des zu bildenden Produktes abhängt, gebildet. Es liegen vier unterschiedliche Bereiche vor, und zwar der Aufgabe- und Querverteilungsbereich A, in welchem über den Schlauch 10, welcher mit dem Vorratsbehälter 11, der eine thermische Isolierung 12 aufweist, verbunden ist. Daran schließt ein Teilspalt 17a, der bis zum unteren Scheitel S der ersten in Bewegungsrichtung a gesehenen Umlenkrolle 6 für das obere Stahlband 2 mit einem Radius R₁ von 900 mm reicht. Unter dem Scheitel S der Umlenkrolle ist jene Erzeugende zu verstehen, welche den geringsten Normalabstand d zum unteren Stahlband 1 aufweist. Zwischen dem unteren Stahlband 1 und dem oberen Stahlband 2 ist ein Spalt 17 gebildet. Das untere Stahlband 1 liegt auf Rollen 13, die einen Durchmesser von 150 mm aufweisen und jeweils in Gruppen EFGHI zusammengefasst sind und sowohl vertikal als auch horizontal unverschiebbar sind und über Reibung mit dem unteren Stahlband 1 als rollende Unterstützung dienen. Die Rollen 14 mit einem Durchmesser von 150 mm, die mit dem oberen Stahlband 2 kooperieren, sind ebenfalls in Gruppen, und zwar JKLMN zusammengefasst. Die Gruppen J und K sind über Hydraulikzylinder 15 am Gestell 8 für das obere Stahlband abgestützt und können (nicht dargestellt) mit variablem Druck beaufschlagt werden, womit die Rollen in einer Mittellage einstellbar sind. Das untere Band schließt mit der Horizontalen h₁ einen Winkel α von 10° im Aufgabenbereich A und Polymerisationsbereich B ein. Dieser gerade Bereich geht über einen kreisförmigen Bereich F₁ mit einem Radius R₃ von 4 m in einen weiteren geradlinigen Bereich, und zwar der Nachpolymerisationsbereich C und Entnahmebereich D mit einer Umlenkrolle 5, über. Das obere Stahlband 2 weist nach dem Aufgabebereich eine Aufweitung 0 nach oben auf, so dass das Stahlband 2 nicht geradlinig verläuft. Danach tritt eine Verengung des Normalabstandes zwischen unterem und oberem Band je nach zu polymerisierenden Produkt um ca. 20 % ein. Im Polymerisationsbereich B wird über ein Wasserbad oder über einen Sprühregen mit heißem Wasser eine Erhitzung auf 90°C durchgeführt. Im Nachpolymerisationsbereich C werden das untere Stahlband 1 und das obere Stahlband 2 auf 135°C temperiert. Im Entnahmebereich D wird das untere Stahlband mit einem nach oben gerichteten Wasserstrahl auf 40°C abgekühlt. In einer Produktionsanlage beträgt die Summe der Bereiche A, B, C und D 200 m, die Breite der Bänder 4 m und die Geschwindigkeit der Stahlbänder 5 m pro Minute. Im Bereich des Teilspaltes 17a zwischen unterem 1 und oberem Stahlband 2 ist eine Absaugung 16 vorgesehen, mit dem der Druck von Atmosphärendruck auf 8/10 desselben abgesenkt werden kann, wodurch ein geringerer Lufteinschluss in der zu polymerisierenden Masse erzielt werden kann.

Die Verteilung der Masse wurde an einer Versuchsanlage bestimmt, wobei sowohl das untere als auch das obere Band eine Breite größer 4 m und 60°C aufgewiesen hat, und der Durchmesser der Umlenkrollen 1.800 m betragen hat. Der Schlauch mit einem Innendurchmesser von 50 mm und einem Abstand von 50 mm vom unteren Stahlband 1 mit einer Geschwindigkeit von 5 m pro Minute, mit dem die zu polymerisierende Masse (ein Vorpolymerisat aus Methylmethacrylat (MMA) und einer Temperatur von 60°C und einer Viskosität von 10 Pas aufgebracht wurde, hatte einen Durchmesser von 50 mm, und der Abstand vom unteren Stahlband betrug ebenfalls 50 mm. Der Schlauch war mittig, bezogen auf die Breite des unteren Bandes, angeordnet.

### Beispiel 1:

Ein Vorpolymerisat aus Methylmethacrylat (MMA) mit einem Katalysator, das eine Viskosität zwischen 5 Pas und 50 Pas aufwies, wurde in die oben angeführte Versuchsanlage eingebracht. Der Winkel α betrug 10°. Die Masse wurde über die gesamte Breite der Bänder gleichmäßig verteilt.

### Beispiel 2:

Es wurde analog zu Beispiel 1, jedoch mit einer vorpolymerisierten Mischung, und zwar MMA mit einer Viskosität von 1 Pas bis 5 Pas, eingebracht. Der Winkel α betrug 8°, und es wurde gleichmäßig auf 4 m Breite verteilt.

### Beispiel 3:

Es wurde analog der Beispiele 1 und 2 eine vorpolymerisierte Mischung von MMA, jedoch mit einer Viskosität von 50 Pas bis 150 Pas und einem Winkel α von 12°, verarbeitet. Die Masse wurde auf 4 m Breite gleichmäßig verteilt.

Die nach den Beispielen 1 bis 3 verteilten Mischungen wurden in einer Produktionsanlage mit 200 m Länge entsprechend der Figurenbeschreibung verarbeitet. Das heißt, das Band wurde nur einmal von einem linearen Bereich in einen weiteren linearen Bereich umgelenkt. Das so erhaltene Produkt war optisch leer und wies eine gleichmäßige Dicke von 2 mm ± 0,05 mm auf.

Mit der erfindungsgemäßen Vorrichtung können z. B. folgende polymersierbare Massen mit einer oder mehreren Gruppen CH₂ = C<, wie Methylmethacrylate, Butylmethacrylate, Styrol, Vinylacetate, Glycoldimethacrylate, Allylmethacrylate, Diallyloxilate, verarbeitet werden.

## Patentansprüche

1. Vorrichtung zum kontinuierlichen Polymerisieren einer fließfähigen Masse zu Platten zwischen zwei an ihren zueinander weisenden glatten Flächen von bewegbaren endlosen Stahlbändern (1, 2), insbesondere Edelstahlbändern, welche die Masse formen, wobei zwischen den Stahlbändern (1, 2), die normal zur Bewegungsrichtung (a) horizontal ausgerichtet sind, die an Rollen führbar und an Umlenkrollen (5, 6) umlenkbar sind, ein verjüngender Spalt (17) gebildet ist, welcher lateral beidseits mit einem unteren und oberen Stahlband (1, 2) kooperierende bewegte Begrenzer für den Spalt (17) in einem Aufgabe- und Querverteilungsbereich (A) und Polymerisationsbereich (B) aufweisen, und das untere Stahlband (1) entgegengesetzt der Bewegungsrichtung (a) der Stahlbänder (1, 2) gesehen, über das obere Stahlband (2) hinausragt, wobei ein offener Aufgabebereich für die fließfähige Masse mit einem in Bewegungsrichtung gesehen anschließenden Teilspalt (17a) mit dem Querverteilungsbereich für die fließfähige Masse gebildet ist, und mehrere Bereiche zur Temperierung der beiden Stahlbänder auf unterschiedliche Temperaturen in Bewegungsrichtung der Stahlbänder (1, 2) vorgesehen sind, und der Abstand zwischen den Stahlbändern einstellbar ist, **dadurch gekennzeichnet, dass** die fließfähige Masse über nur ein Rohr (10), einen Schlauch od. dgl. verbunden mit einem Vorratsbehälter (11), der vorzugsweise eine thermische Isolierung (12) aufweist, auf den Aufgabebereich (A) direkt einbringbar ist, und das untere gerade vertikal festgestellte Stahlband (1) im Aufgabe- und Querverteilungsbereich, dem Teilspalt (17a) in Bewegungsrichtung (a) gesehen mit der Horizontalen (h₁) einen Winkel (α) von 6° bis 15°, insbesondere 8° bis 12°, einschließt, und das obere Stahlband (2) im Polymerisationsbereich (B) über Federmittel (15) gegen die fließfähige Masse haltbar ist, durch welche das untere Band (1) gegen die mit diesem kooperierenden Rollen (13) haltbar ist, und nach diesem das untere Stahlband (1) in Bewegungsrichtung (a) gesehen die Form *einer nach oben ausgerichteten* Krümmung (F₁) aufweist und nach diesem anschließend ein gerader *etwa horizontaler* Bereich (C) vorgesehen ist.

2. Vorrichtung nach Anspruch 1, **dadurch gekennzeichnet, dass** das unttere Stahlband (1) in vertikaler und horizontaler Richtung durch die von unten angreifenden feststehenden drehbaren Rollen (13) in seinem Verlauf festgelegt ist.

3. Vorrichtung nach Anspruch 1 oder 2, **dadurch gekennzeichnet, dass** in Bereichen das obere Stahlband (2) über Zylinder/Kolbenaggregate (15) von oben auf das untere Stahlband (1) über die Masse angreifende Rollen (14) in seinem Verlauf festlegbar ist.

4. Vorrichtung nach Anspruch 3, **dadurch gekennzeichnet, dass** die Rollen (14) in ihren Lagen, welche an dem oberen Stahlband (2) angreifen, von oben nach unten und umgekehrt in einer Mittellage zum Festlegen unter Berücksichtigung der Volumsänderung variabel sind.

5. Vorrichtung nach einem der Ansprüche 1 bis 4, **dadurch gekennzeichnet, dass** die Rollen (14), welche am oberen Stahlband angreifen, mit unterschiedlichem Druck beaufschlagbar sind.

6. Vorrichtung nach einem der Ansprüche 1 bis 5, **dadurch gekennzeichnet, dass** das obere Stahlband (2) und die mit diesem zusammenwirkenden Rollen (14) an einem gemeinsamen Gestell (8) angeordnet sind.

7. Vorrichtung nach einem der Ansprüche 1 bis 6, **dadurch gekennzeichnet, dass** im Aufgabe- und Querverteilungsbereich (A) Gase, insbesondere Luft, zwischen den Stahlbändern (1, 2) absaugbar sind.

8. Vorrichtung nach einem der Ansprüche 1 bis 7, **dadurch gekennzeichnet, dass** eine Mehrzahl von Rollen (13, 14) des oberen und/oder unteren Stahlbandes (1, 2) zu einzelnen Gruppen (E bis I und J bis N) zusammengefasst sind.

9. Vorrichtung nach einem der Ansprüche 1 bis 8, **dadurch gekennzeichnet, dass** ein geradliniger etwa horizontaler Bereich (D) des unteren Stahlbandes (1) an einem Auslauf der Vorrichtung vorgesehen ist.

10. Vorrichtung nach Anspruch 9, **dadurch gekennzeichnet, dass** der geradlinige Bereich (D) im Auslauf des unteren Stahlbandes (1) kühlbar ist.

## Claims

1. A device for the continuous polymerisation of a free-flowing material to form sheets between two smooth surfaces of movable endless steel belts (1, 2), especially special steel belts, which face towards one another and which shape the material, wherein there is formed, between the steel belts (1, 2) which are normally orientated horizontal to the direction of movement (a) and which can be guided on rollers and deflected at deflection rollers (5, 6), a narrowing gap (17), which comprises delimiters for the gap (17) in a delivery and cross-distribution region (A) and polymerisation region (B), said delimiters being moved laterally on both sides cooperating with a lower and upper steel belt (1, 2), and the lower steel belt (1), viewed in the opposite direction from the direction of movement (a) of the steel belts (1, 2), projects beyond the upper steel belt (2), wherein an open delivery region for the free-flowing material with a, viewed in the direction of movement, following partial gap (17a) is formed with the cross-distribution region for the free-flowing material, and a plurality of regions for the temperature regulation of the two steel belts at different temperatures are provided in the direction of movement of the steel belts (1, 2), and the distance between the steel belts is adjustable, **characterised in that** the free-flowing material can be introduced directly to the delivery region (A) via only one tube (10), a hose or suchlike connected to a reservoir vessel (11), which preferably comprises a thermal insulation (12), and the lower, straight vertically fixed steel belt (1) in the delivery and cross-distribution region, the partial gap (17a) viewed in the direction of movement (a), forms an angle (α) of 6° to 15°, in particular 8° to 12°, with the horizontal (h₁), and the upper steel belt (2) can be held against the free-flowing material by spring means (15) in the polymerisation region (B), by means of which the lower belt (1) can be held against the rollers (13) cooperating therewith, and thereafter the lower steel belt (1) has the shape *of an upwardly orientated* curvature (F₁), viewed in the direction of movement (a), and thereafter a straight *approximately horizontal* region (C) is then provided.

2. The device according to claim 1, **characterised in that** the lower steel belt (1) is fixed in its course in the vertical and horizontal direction by the fixed rotatable rollers (13) engaging from below.

3. The device according to claim 1 or 2, **characterised in that** the upper steel belt (2) can be fixed in its course in sections by cylinder/piston units (15) from above on the lower steel belt (1) via rollers (14) acting on the material.

4. The device according to claim 3, **characterised in that** the rollers (14), in their position acting on the upper steel belt (2), are variable downwards and vice versa in a central position for the fixing in position to take account of the change in volume.

5. The device according to any one of claims 1 to 4, **characterised in that** the rollers (14) acting on the upper steel belt can be subjected to varying pressure.

6. The device according to any one of claims 1 to 5, **characterised in that** the upper steel belt (2) and the rollers (14) cooperating with the latter are arranged on a common stand (8).

7. The device according to any one of claims 1 to 6, **characterised in that**, in the delivery and cross-distribution region (A), gases, in particular air, can be sucked away between the steel belts (1, 2).

8. The device according to any one of claims 1 to 7, **characterised in that** a plurality of rollers (13, 14) of the upper and/or lower steel belt (1, 2) is combined into individual groups (E to I and J to N).

9. The device according to any one of claims 1 to 8, **characterised in that** a rectilinear, approximately horizontal region (D) of the lower steel belt (1) is provided at a run-out of the device.

10. The device according to claim 9, **characterised in that** the rectilinear region (D) can be cooled in the run-out of the lower steel belt (1).

## Revendications

1. Dispositif de polymérisation en continu d'une masse pouvant s'écouler vers des plaques entre deux surfaces lisses tournées l'une face à l'autre de bandes d'acier sans fin mobiles (1, 2), en particulier des bandes d'acier inoxydable, qui mettent en forme la masse, dans lequel entre les bandes d'acier (1, 2) qui sont orientées normalement horizontalement par rapport au sens de mouvement (a), qui peuvent être acheminées sur les rouleaux et dérivées sur des rouleaux de dérivation (5, 6), une fente allant en s'affinant (17) est formée, qui présente bilatéralement des limiteurs mobiles coopérant avec une bande d'acier supérieure et inférieure (1, 2) pour la fente (17) dans une zone de charge et de répartition transversale (A) et une zone de polymérisation (B) et la bande d'acier inférieure (1) vue dans le sens opposé au sens de mouvement (a) des bandes d'acier (1, 2) dépasse au dessus de la bande d'acier supérieure (2), une zone de charge ouverte de la masse pouvant s'écouler avec une fente partielle adjointe vue dans le sens du mouvement (17a) étant formée avec la zone de répartition partielle de la masse pouvant s'écouler et plusieurs zones de climatisation des deux bandes d'acier à différentes températures étant prévues dans le sens du mouvement des bandes d'acier (1, 2) et la distance entre les bandes d'acier pouvant être ajustée, **caractérisé en ce que** la masse pouvant s'écouler est reliée par uniquement un tube (10), un tuyau ou similaire à un réservoir (11) qui présente de préférence une isolation thermique (12), peut être inséré directement sur la zone de charge (A) et la bande d'acier inférieure qui vient d'être placée verticalement (1) dans la zone de charge et de répartition transversale, de la fente partielle (17a), vue dans le sens du mouvement (a) formant avec le plan horizontal (h₁), un angle (α) de 6° à 15°, en particulier de 8° à 12°, et la bande d'acier supérieure (2) dans la zone de polymérisation (B) étant maintenue au moyen de ressorts (15) contre la masse pouvant s'écouler, par lesquels la bande inférieure (1) peut être maintenue contre celle-ci avec ce rouleau coopérant (13) et après celui-ci, la bande d'acier inférieure (1) vue dans le sens du mouvement (a) présente la forme d'une courbure orientée vers le haut (F₁) et après celui-ci, une zone plus droite à peu près horizontale (C) est ensuite prévue.

2. Dispositif selon la revendication 1, **caractérisé en ce que** la bande d'acier inférieure (1) est bloquée en direction verticale et horizontale, par des rouleaux (13) fixes pouvant tourner, agissant du dessous dans son parcours.

3. Dispositif selon la revendication 1 ou 2, **caractérisé en ce que** dans des zones, la bande d'acier supérieure (2) peut être bloquée par des cylindres/ systèmes de pistons (15) de rouleaux (14) agissant du dessus sur la bande d'acier inférieure (1) sur la masse dans son parcours.

4. Dispositif selon la revendication 3, **caractérisé en ce que** les rouleaux (14) dans leurs paliers qui sont en prise avec la bande d'acier supérieure (2) peuvent varier du haut vers le bas et inversement, dans une position médiane de blocage en tenant compte de la modification du volume.

5. Dispositif selon l'une des revendications 1 à 4, **caractérisé en ce que** les rouleaux (14) qui sont en prise sur la bande d'acier supérieure, peuvent recevoir une pression différente.

6. Dispositif selon l'une des revendications 1 à 5, **caractérisé en ce que** la bande d'acier supérieure (2) et les rouleaux (14) agissant conjointement sur celle-ci, sont disposés sur un support commun (8).

7. Dispositif selon l'une des revendications 1 à 6, **caractérisé en ce que**, dans la zone de charge et de répartition transversale (A), des gaz, en particulier de l'air, peuvent être aspirés entre les bandes d'acier (1, 2).

8. Dispositif selon l'une des revendications 1 à 7, **caractérisé en ce qu'**une pluralité de rouleaux (13, 14) de la bande d'acier supérieure et/ou inférieure (1, 2) sont rassemblés en groupes individuels (E à 1 et J à N).

9. Dispositif selon l'une des revendications 1 à 8, **caractérisé en ce qu'**une zone linéaire à peu près horizontale (D) de la bande d'acier inférieure (1) est prévue sur une sortie du dispositif.

10. Dispositif selon la revendication 9, **caractérisé en ce que** la zone linaire (D) peut être refroidie sur le parcours de la bande d'acier inférieure.
